# EUROPEAN PATENT SPECIFICATION

(11) **EP 4 513 143 B1**
(45) Date of publication and mention of the grant of the patent: **11.11.2026**
(21) Application number: 24192574.2
(22) Date of filing: 02.08.2024
(51) Int. Cl.: G08G 5/21, G01C 23/00, G08G 5/23, G08G 5/53, G08G 5/55

(54) **SYSTEMS AND METHODS FOR DISPLAYING AIRCRAFT ROLL RATE ON A VERTICAL TAKE-OFF AND LANDING AIRCRAFT DISPLAY**
SYSTEME UND VERFAHREN ZUR ANZEIGE DER FLUGZEUGROLLRATE AUF EINER ANZEIGE EINES VERTIKAL STARTENDEN UND LANDENDEN FLUGZEUGS
SYSTÈMES ET PROCÉDÉS D'AFFICHAGE DE TAUX DE ROULIS D'AÉRONEF SUR UN AFFICHAGE D'AÉRONEF À DÉCOLLAGE ET ATTERRISSAGE VERTICAUX

(30) Priority: 21.08.2023 US 202318452860
(43) Date of publication of application: 26.02.2025
(73) Proprietor: Honeywell International Inc., Charlotte, NC 28202 (US)
(72) Inventor: HE, Gang, Charlotte, 28202 (US)
(74) Representative: Ingrassia, Fisher & Lorenz UK Ltd.

(56) References cited:
- US-A1- 2012 303 186
- US-A1- 2016 363 459

## Description

### TECHNICAL FIELD

The present invention generally relates to aircraft operations and more particularly relates to systems and methods for displaying aircraft roll rate on a vertical take-off and landing (VTOL) aircraft display.

### BACKGROUND

Vertical take-off and landing (VTOL) aircraft often utilize complex propulsion and control systems increasing the importance of operational envelope awareness. The use of such complex systems may render the stability of VTOL aircraft more sensitive to aircraft roll rates than traditional aircraft. As a result, aircraft roll rate awareness in conjunction with roll angle awareness may be an important element of VTOL aircraft operation. US 2016/363459 A1 discloses an electronic device for aiding with the piloting of an aircraft.

Hence, there is a need for systems and methods for displaying aircraft roll rate on a VTOL aircraft display.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In various embodiments, a system for displaying roll rate on a vertical take-off and landing (VTOL) aircraft display is provided according to claim 1.

In various embodiments, a method for displaying roll rate on a vertical take-off and landing (VTOL) aircraft disp is provided according to claim 14.

Furthermore, other desirable features and characteristics of the system and method for displaying roll rate on a vertical take-off and landing (VTOL) aircraft display become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 is a block diagram representation of a system configured to implement a system for displaying aircraft roll rate on a vertical take-off and landing (VTOL) aircraft display in accordance with least one embodiment;
FIG. 2 is a block diagram representation of a VTOL aircraft including a VTOL roll rate display system in accordance with at least one embodiment;
FIG. 3 is a flowchart representation of a method of displaying aircraft roll rate on a VTOL aircraft display in accordance with at least one embodiment;
FIG. 4 is an exemplary cockpit display including a graphical representation of an aircraft roll rate with respect to a roll rate scale in accordance with at least one embodiment; and
FIG. 5 an exemplary graphical representation of an aircraft roll rate with respect to a roll rate scale when the aircraft roll rate is below a roll rate threshold in accordance with at least one embodiment; and
FIG. 6 is an exemplary graphical representation of an aircraft roll rate with respect to a roll rate scale when the aircraft roll rate is greater than a roll rate threshold in accordance with at least one embodiment.

### DETAILED DESCRIPTION

The following detailed description is merely exemplary in nature. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

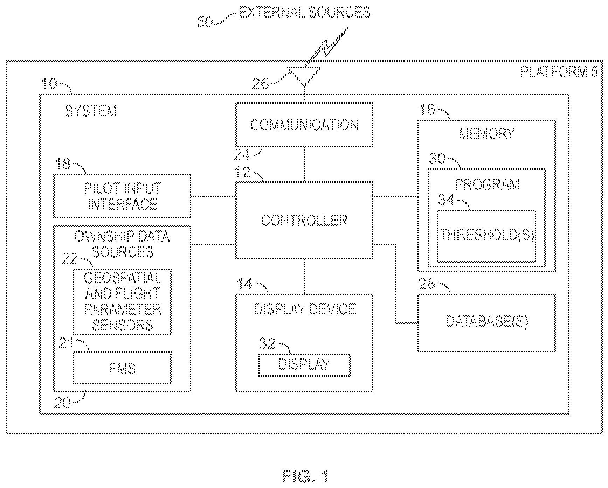

FIG. 1 is a block diagram representation of a system 10 configured to display aircraft roll rate on a vertical take-off and landing (VTOL) aircraft display in accordance with an embodiment (shortened herein to "system" 10), as illustrated in accordance with an exemplary and non-limiting embodiment of the present disclosure. The system 10 may be utilized onboard a mobile platform 5, as described herein. In various embodiments, the mobile platform is a VTOL aircraft, which carries or is equipped with the system 10. As schematically depicted in FIG. 1, the system 10 includes the following components or subsystems, each of which may assume the form of a single device or multiple interconnected devices: a controller circuit 12 operationally coupled to: at least one display device 14; computer-readable storage media or memory 16; an optional input interface 18, and ownship data sources 20 including, for example, a flight management system (FMS) 21 and an array of flight system state and geospatial sensors 22.

In various embodiments, the system 10 may be separate from or integrated within: the flight management system (FMS) 21 and/or a flight control system (FCS). Although schematically illustrated in FIG. 1 as a single unit, the individual elements and components of the system 10 can be implemented in a distributed manner utilizing any practical number of physically distinct and operatively interconnected pieces of hardware or equipment. When the system 10 is utilized as described herein, the various components of the system 10 will typically all be located onboard the mobile platform 5.

The term "controller circuit" (and its simplification, "controller"), broadly encompasses those components utilized to carry-out or otherwise support the processing functionalities of the system 10. Accordingly, the controller circuit 12 can encompass or may be associated with a programmable logic array, application specific integrated circuit or other similar firmware, as well as any number of individual processors, flight control computers, navigational equipment pieces, computer-readable memories (including or in addition to the memory 16), power supplies, storage devices, interface cards, and other standardized components. In various embodiments, the controller circuit 12 embodies one or more processors operationally coupled to data storage having stored therein at least one firmware or software program (generally, computer-readable instructions that embody an algorithm) for carrying-out the various process tasks, calculations, and control/display functions described herein. During operation, the controller circuit 12 may be programmed with and execute the at least one firmware or software program, for example, a program 30, that embodies an algorithm described herein for displaying aircraft roll rate on a VTOL aircraft display in accordance with an embodiment on a mobile platform 5, where the mobile platform 5 is a VTOL aircraft, and to accordingly perform the various process steps, tasks, calculations, and control/display functions described herein.

The controller circuit 12 may exchange data, including real-time wireless data, with one or more external sources 50 to support operation of the system 10 in embodiments. In this case, bidirectional wireless data exchange may occur over a communications network, such as a public or private network implemented in accordance with Transmission Control Protocol/Internet Protocol architectures or other conventional protocol standards. Encryption and mutual authentication techniques may be applied, as appropriate, to ensure data security.

The memory 16 is a data storage that can encompass any number and type of storage media suitable for storing computer-readable code or instructions, such as the aforementioned software program 30, as well as other data generally supporting the operation of the system 10. The memory 16 may also store one or more threshold 34 values, for use by an algorithm embodied in software program 30. One or more database(s) 28 are another form of storage media; they may be integrated with memory 16 or separate from it.

In various embodiments, aircraft-specific parameters and information for an aircraft may be stored in the memory 16 or in a database 28 and referenced by the program 30. Non-limiting examples of aircraft-specific information includes an aircraft weight and dimensions, performance capabilities, configuration options, and the like.

Flight parameter sensors and geospatial sensors 22 supply various types of data or measurements to the controller circuit 12 during an aircraft flight. In various embodiments, the geospatial sensors 22 supply, without limitation, one or more of: inertial reference system measurements providing a location, Flight Path Angle (FPA) measurements, airspeed data, groundspeed data (including groundspeed direction), vertical speed data, vertical acceleration data, altitude data, attitude data including pitch data and roll measurements, yaw data, heading information, sensed atmospheric conditions data (including wind speed and direction data), flight path data, flight track data, radar altitude data, and geometric altitude data.

With continued reference to FIG. 1, the display device 14 can include any number and type of image generating devices on which one or more avionic displays 32 may be produced. When the system 10 is utilized for a manned aircraft, the display device 14 may be affixed to the static structure of the Aircraft cockpit as, for example, a Head Down Display (HDD) or Head Up Display (HUD) unit. In various embodiments, the display device 14 may assume the form of a movable display device (e.g., a pilot-worn display device) or a portable display device, such as an Electronic Flight Bag (EFB), a laptop, or a tablet computer carried into the aircraft cockpit by a pilot.

At least one avionic display 32 is generated on the display device 14 during operation of the system 10; the term "avionic display" is synonymous with the term "aircraft-related display" and "cockpit display" and encompasses displays generated in textual, graphical, cartographical, and other formats. The system 10 can generate various types of lateral and vertical avionic displays 32 on which map views and symbology, text annunciations, and other graphics pertaining to flight operation and planning are presented for a pilot to view. The display device 14 is configured to continuously render at least a lateral display showing the aircraft at its current location within the map data. The avionic display 32 generated and controlled by the system 10 can include graphical user interface (GUI) objects and alphanumerical input displays of the type commonly presented on the screens of multifunction control display units (MCDUs), as well as Control Display Units (CDUs) generally. Specifically, embodiments of the avionic displays 32 include one or more two-dimensional (2D) avionic displays, such as a horizontal (i.e., lateral) navigation display or vertical navigation display (i.e., vertical situation display VSD); and/or on one or more three dimensional (3D) avionic displays, such as a Primary Flight Display (PFD) or an exocentric 3D avionic display.

In various embodiments, a human-machine interface is implemented as an integration of a pilot input interface 18 and a display device 14. In various embodiments, the display device 14 is a touch screen display. In various embodiments, the human-machine interface also includes a separate pilot input interface 18 (such as a keyboard, cursor control device, voice input device, or the like), generally operationally coupled to the display device 14. Via various display and graphics systems processes, the controller circuit 12 may command and control a touch screen display device 14 to generate a variety of graphical user interface (GUI) objects or elements described herein, including, for example, buttons, sliders, and the like, which are used to prompt a user to interact with the human-machine interface to provide user input; and for the controller circuit 12 to activate respective functions and provide user feedback, responsive to received user input at the GUI element.

In various embodiments, the system 10 may also include a dedicated communications circuit 24 configured to provide a real-time bidirectional wired and/or wireless data exchange for the controller 12 to communicate with the external sources 50 (including, each of: traffic, air traffic control (ATC), satellite weather sources, ground stations, neighboring aircraft, and the like). In various embodiments, the communications circuit 24 may include a public or private network implemented in accordance with Transmission Control Protocol/Internet Protocol architectures and/or other conventional protocol standards. Encryption and mutual authentication techniques may be applied, as appropriate, to ensure data security. In some embodiments, the communications circuit 24 is integrated within the controller circuit 12, and in other embodiments, the communications circuit 24 is external to the controller circuit 12.

In certain embodiments of the system 10, the controller circuit 12 and the other components of the system 10 may be integrated within or cooperate with any number and type of systems commonly deployed onboard an aircraft including, for example, an FMS 21.

The disclosed algorithm is embodied in a hardware program or software program (e.g. program 30 in controller circuit 12) and configured to operate when the aircraft is in any phase of flight. The algorithm enables displaying aircraft roll rate on a VTOL aircraft display.

In various embodiments, the provided controller circuit 12, and therefore its program 30 may incorporate the programming instructions for: receiving aircraft roll data from at least one geospatial sensor; generating a roll rate scale associated with a desirable roll rate range of the VTOL; determining an aircraft roll rate of the VTOL aircraft based on the aircraft roll data and aircraft body rotation data; and generating the VTOL aircraft display comprising a graphical representation of the roll rate scale and the aircraft roll rate with respect to the roll rate scale for display on the display device.

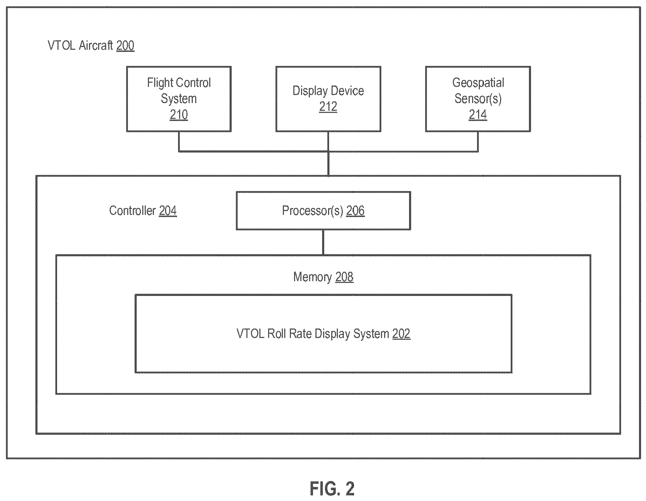

Referring to FIG. 2, a block diagram representation of a VTOL aircraft 200 including a VTOL roll rate display system 202 in accordance with at least one embodiment is shown. In various embodiments, the configuration of the VTOL aircraft 200 is similar to the configuration of the platform 5 described with reference to FIG. 1. In at least one embodiment, the VTOL aircraft 200 is an electric VTOL aircraft. In at least one embodiment, the VTOL aircraft 200 is a manned aircraft. In at least one embodiment, the VTOL aircraft 200 is an unmanned aircraft. The VTOL aircraft 200 includes at least one controller 204. The controller 204 includes at least one processor 206 and at least one memory 208. The memory 208 includes the VTOL roll rate display system 202. In various embodiments, the controller 204 may include additional components that facilitate operation of the controller 204.

The controller 204 is configured to be communicatively coupled to an FCS 210, a display device 212, and one or more geospatial sensor(s) 214. The FCS 210 is similar to the FCS described in FIG. 1. The display device 212 is similar to the display device 14 in FIG. 1. The one or more geospatial sensor(s) 214 are similar to the geospatial sensors 22 in FIG. 1.

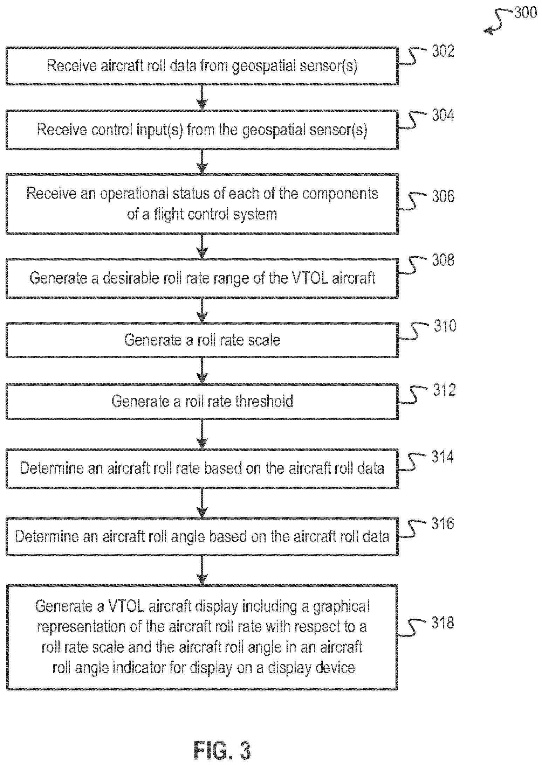

The VTOL aircraft 200, the controller 204, and/or the VTOL roll rate display system 202 may include additional components that facilitate operation of VTOL roll rate display system 202. The operation of the VTOL roll rate display system 202 will be described in further detail below with reference to FIG. 3.

Referring to FIG. 3, a flowchart representation of a method 300 of displaying aircraft roll rate on a VTOL aircraft display in accordance with at least one embodiment is shown. The method 300 will be described with reference to an exemplary implementation of a VTOL roll rate display system 202. As can be appreciated in light of the disclosure, the order of operation within the method 300 is not limited to the sequential execution as illustrated in FIG. 3 but may be performed in one or more varying orders as applicable and in accordance with the present disclosure.

At 302, the VTOL roll rate display system 202 receives aircraft roll rate data from geospatial sensor(s) 214. In at least one embodiment, the VTOL roll rate display system 202 receives aircraft roll rate data and aircraft body rotation data from geospatial sensor(s) 214. At 304, the VTOL roll rate display system 202 receives one or more control inputs from the geospatial sensor(s) 214. Examples of control inputs include, but are not limited to, airspeed data, groundspeed data, vertical speed data, vertical acceleration data, altitude data, pitch data, yaw data, heading data, atmospheric condition data, wind speed data, wind direction data, flight path data, radar altitude data, and geometric altitude data.

At 306, the VTOL roll rate display system 202 receives an operational status of each of the components of an FCS 210 of the VTOL aircraft 200. The operational status of a component of the FCS 210 indicates whether that component is operational or non-operational. For example, the components of the FCS 210 of the VTOL aircraft 200 include propellors. If one of the propellors fail, the operational status of that propellor is non-operational.

At 308, the VTOL roll rate display system 202 generates a desirable roll rate range of the VTOL aircraft 200. A VTOL aircraft 200 may experience an aircraft roll rate in one of two directions. The desirable roll rate range defines the desirable range of roll rate values between a maximum desirable roll rate in one direction and a roll rate value of zero and between a maximum desirable roll rate in the other direction and the roll rate value of zero. As long as the VTOL aircraft 200 roll rate remains within the desirable roll rate range, the VTOL aircraft 200 will not experience aircraft roll angles that could potentially lead to flight safety issues. The desirable roll rate range is updated periodically to reflect changing flight conditions. For example, the desirable roll rate range may be updated every two to three seconds.

In various embodiments, the desirable roll rate range is based on the one or more control inputs received from the geospatial sensor(s) 214. For example, wind speed and wind direction may impact the desirable roll rate range. In various embodiments, the desirable roll rate range is based on the operational status of the components of the FCS 210. For example, a non-operational status of a propeller of the VTOL aircraft 200 may impact the desirable roll rate range. In various embodiments, the desirable roll rate range is based on the one or more control inputs received from the geospatial sensor(s) 214 and the operational status of the components of the FCS 210. In at least one embodiment, the desirable roll rate range is based in part on the VTOL aircraft model of the VTOL aircraft 200. The VTOL aircraft model defines one or more of aircraft weight, aerodynamic shape, and propulsion components. At 310, the VTOL roll rate display system 202 generates a roll rate scale that reflects the desirable roll rate range.

At 312, the VTOL roll rate display system 202 generate a roll rate threshold. The roll rate threshold has a value that falls within the desirable roll rate range. When the VTOL aircraft 200 has an aircraft roll rate that is below the roll rate threshold, the VTOL aircraft 200 is operating within flight safety margins and the VTOL aircraft 200 will not experience aircraft roll angles that could potentially lead to flight safety issues. When the VTOL aircraft 200 has an aircraft roll rate that is above the roll rate threshold, the aircraft roll rate is approaching one of the maximum desirable roll rate values of the desirable roll rate range. If the aircraft roll rate continues to increase, the VTOL aircraft 200 may reach an undesirable roll angle that could potentially lead to flight safety issues.

In various embodiments, the roll rate threshold is based on the one or more control inputs received from the geospatial sensor(s) 214. In various embodiments, the roll rate threshold is based on the operational status of the components of the FCS 210. In various embodiments, the roll rate threshold is based on the one or more control inputs received from the geospatial sensor(s) 214 and the operational status of the components of the FCS 210. In at least one embodiment, the roll rate threshold is based in part on the VTOL aircraft model.

At 314, the VTOL roll rate display system 202 determines the aircraft roll rate of the VTOL aircraft 200 based on the aircraft roll rate data received from the geospatial sensor(s) 214. In at least one embodiment, the VTOL roll rate display system 202 determines the aircraft roll rate of the VTOL aircraft 200 based on the aircraft roll rate data and the aircraft body rotation data received from the geospatial sensor(s) 214. At 316, the VTOL roll rate display system 202 determines the aircraft roll angle of the VTOL aircraft 200 based on the aircraft roll rate data received from the geospatial sensor(s) 214.

At 318, the VTOL roll rate display system 202 generates a VTOL aircraft display including a graphical representation of the aircraft roll rate with respect to the roll rate scale that defines the desirable roll rate range and a graphical representation of the aircraft roll angle in an aircraft roll angle indicator for display on a display device 212. In various embodiments, the VTOL aircraft display is a primary flight display (PFD).

The graphical representation of the roll rate scale reflects the desirable roll rate range of the VTOL aircraft 200. The VTOL roll rate display system 202 generates a graphical representation of the aircraft roll rate to overlay the roll rate scale at the value of the aircraft roll rate on the roll rate scale.

In various embodiments, the graphical representation of the roll rate scale reflects a desirable roll rate range based on the one or more control inputs received from the geospatial sensor(s) 214. In various embodiments, the graphical representation of the roll rate scale reflects a desirable roll rate range based on the operational status of the components of the FCS 210. In various embodiments, the graphical representation of the roll rate scale reflects a desirable roll rate range based on the one or more control inputs received from the geospatial sensor(s) 214 and the operational status of the components of the FCS 210. In at least one embodiment, the graphical representation of the roll rate scale reflects a desirable roll rate range based in part on the VTOL aircraft model.

In at least one embodiment, the VTOL roll rate display system 202 generates the graphical representation of the roll rate scale as a horizonal roll rate scale. The VTOL roll rate display system 202 generates a graphical representation of the aircraft roll rate as a donut shaped symbol that overlays the horizontal roll rate scale at the value of the aircraft roll rate on the horizontal roll rate scale. While the graphical representation of the aircraft roll rate has been described as a donut shaped symbol, in alternative embodiments, the aircraft roll rate may be graphically represented using symbols having different shapes.

In at least one embodiment, the VTOL roll rate display system 202 generates the graphical representation of the roll rate scale as a horizonal roll rate scale bar. The VTOL roll rate display system 202 generates a graphical representation of the aircraft roll rate as a donut shaped symbol that overlays the horizontal roll rate scale bar at the value of the aircraft roll rate on the horizontal roll rate scale bar. While the graphical representation of the aircraft roll rate has been described as a donut shaped symbol, in alternative embodiments, the aircraft roll rate may be graphically represented using symbols having different shapes.

In at least one embodiment, the VTOL roll rate display system 202 generates a width of the horizonal roll rate scale bar to reflect the desirable roll rate range. For example, the width of the horizonal roll rate scale bar for a first desirable roll rate range may be smaller than the width of the horizonal roll rate scale bar for a second desirable roll rate range when the first desirable roll rate range is less than the second desirable roll rate range. For example, when the VTOL aircraft 200 is traveling at lower speeds, the width of the horizontal roll rate scale bar is narrower reflecting a smaller desirable roll rate range than when the VTOL aircraft 200 is traveling at higher speeds. At higher speeds, the VTOL aircraft 200 has greater momentum in the direction of flight and has a larger desirable roll rate range than when the VTOL aircraft 200 is traveling at lower speeds.

In at least one embodiment, the roll rate display symbol can conform the roll rate scale to a current roll angle scale where the aircraft roll rate and the desired roll rate symbols move along a roll angle arc.

In various embodiments, the VTOL roll rate display system 202 generates the VTOL aircraft display to include numerical values associated with the desirable roll rate range. In various embodiments, the VTOL roll rate display system 202 generates the VTOL aircraft display to include a numerical value associated with the aircraft roll rate. In at least one embodiment, the VTOL roll rate display system 202 generates the VTOL aircraft display to include numerical values associated with the desirable roll rate range and a numerical value associated with the aircraft roll rate.

In at least one embodiment, the VTOL roll rate display system 202 generates the graphical representation of the roll rate scale to include a roll rate marker indicative of a zero-roll rate on the roll rate scale. In at least one embodiment, the roll rate marker indicative of the zero-roll rate is represented as a triangular symbol that overlays the horizontal roll rate scale bar. While the graphical representation of the roll rate marker has been described as a triangular symbol, in alternative embodiments, the roll rate marker may be graphically represented using symbols having different shapes.

In instances where the desirable roll rate range is based on the operational status of one or more components of the FCS 210 as being non-operational, the roll rate scale may be asymmetrical about the roll rate marker indicative of the zero-roll rate. For example, a propeller failure may impact the desirable roll rate range of the VTOL aircraft 200 in one direction differently than the desirable roll rate range in the opposite direction. The graphical representation of the side of the roll rate scale bar associated with the desirable roll rate range impacted to a greater extent by the propeller failure will have a shorter width (reflecting a smaller desirable roll rate range) than the side of the roll rate scale bar associated with the desirable roll rate range that is impacted to a lesser extent by the propeller failure (reflecting a larger desirable roll rate range).

In various embodiments, the VTOL roll rate display system 202 generates the VTOL aircraft display to depict the graphical representation of the aircraft roll rate using a first format when the aircraft roll rate is below the roll rate threshold and to depict the graphical representation of the aircraft roll rate using a second format when the aircraft roll rate is above the roll rate threshold. In at least one embodiment, the VTOL roll rate display system 202 generates the VTOL aircraft display to graphically depict the aircraft roll rate using a first color when the aircraft roll rate is below the roll rate threshold and to graphically depict the aircraft roll rate using a second color when the aircraft roll rate is above the roll rate threshold. For example, the first color that is used may be green and the second color that is used may be red. In at least one embodiment, the VTOL roll rate display system 202 generates the VTOL aircraft display to graphically depict the aircraft roll rate using a first shape when the aircraft roll rate is below the roll rate threshold and to graphically depict the aircraft roll rate using a second shape when the aircraft roll rate is above the roll rate threshold. The use of a different format to depict the aircraft roll rate when the aircraft roll rate is above the roll rate threshold than when the aircraft roll rate is below the roll rate threshold may increase situational awareness.

In various embodiments, the VTOL roll rate display system 202 generates the VTOL aircraft display to graphically depict the roll rate scale using a first format when the aircraft roll rate is below the roll rate threshold and to graphically depict the roll rate scale using a second format when the aircraft roll rate is above the roll rate threshold.

In various embodiments, when the aircraft roll rate of the VTOL aircraft 200 is less than the roll rate threshold, the VTOL roll rate display system 202 generates the VTOL aircraft display to depict the graphical representation of both ends of the roll rate scale using the first format. When the aircraft roll rate of the VTOL aircraft 200 is greater than the roll rate threshold, the aircraft roll rate is approaching a maximum desirable roll rate in the desirable roll rate range. In at least one embodiment, the VTOL roll rate display system 202 generates the VTOL aircraft display to depict the graphical representation of the end of the roll rate scale associated with the maximum desirable roll rate that the aircraft roll rate is approaching using a second format.

For example, a first color may be used to graphically depict both ends of the roll rate scale when the aircraft roll rate is below the roll rate threshold and a second color may be used to graphically depict the end of the roll rate scale that the aircraft roll rate is approaching when the aircraft roll rate is above the roll rate threshold. The first color that may be used to graphically depict both ends of the roll rate scale when the aircraft roll rate is below the roll rate threshold may be white. The second color that may be used to graphically depict the end of the roll rate scale that the aircraft roll rate is approaching when the aircraft roll rate is above the roll rate threshold may be red. In another example, an un-bolded format may be used to graphically depict both ends of the roll rate scale when the aircraft roll rate is below the roll rate threshold and a bolded format may be used to graphically depict the end of the roll rate scale that the aircraft roll rate is approaching when the aircraft roll rate is above the roll rate threshold.

In at least one embodiment, when the aircraft roll rate is greater than the roll rate threshold, the VTOL roll rate display system 202 generates one or more of a visual alert, a haptic alert, and an audio alert at the VTOL aircraft 200 alerting the pilot that the aircraft roll rate is approaching a maximum desirable roll rate of the desirable roll rate range.

In various embodiments, the VTOL roll rate display system 202 generates the VTOL aircraft display to include a graphical representation of the aircraft roll angle in an aircraft roll angle indicator. The graphical representation of the aircraft roll rate with respect to the roll rate scale is collocated with the graphical representation of the aircraft roll angle in the aircraft roll angle indicator in the VTOL aircraft display.

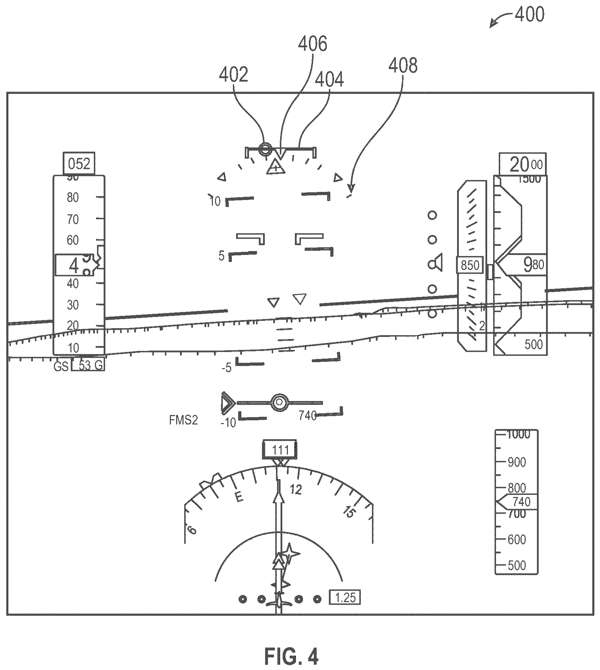

Referring to FIG. 4, an exemplary VTOL aircraft display 400 including a graphical representation of an aircraft roll rate 402 with respect to a roll rate scale 404 in accordance with at least one embodiment is shown. The VTOL aircraft display 400 is a primary flight display (PFD). The roll rate scale 404 is a graphical representation of a desirable roll rate range. The roll rate scale 404 is graphically represented as a horizontal roll rate scale bar. The aircraft roll rate 402 is graphically depicted as a donut shaped symbol that overlays the roll rate scale 404 at the value of the aircraft roll rate. The graphical representation of the roll rate scale 404 includes a roll rate marker 406 indicative of a zero-roll rate on the roll rate scale 404. The roll rate marker 406 is graphically represented as a triangle that overlays the roll rate scale 404. The graphical representation of the aircraft roll rate 402 with respect to the roll rate scale 404 is collocated with a graphical representation of an aircraft roll angle in an aircraft roll angle indicator 408.

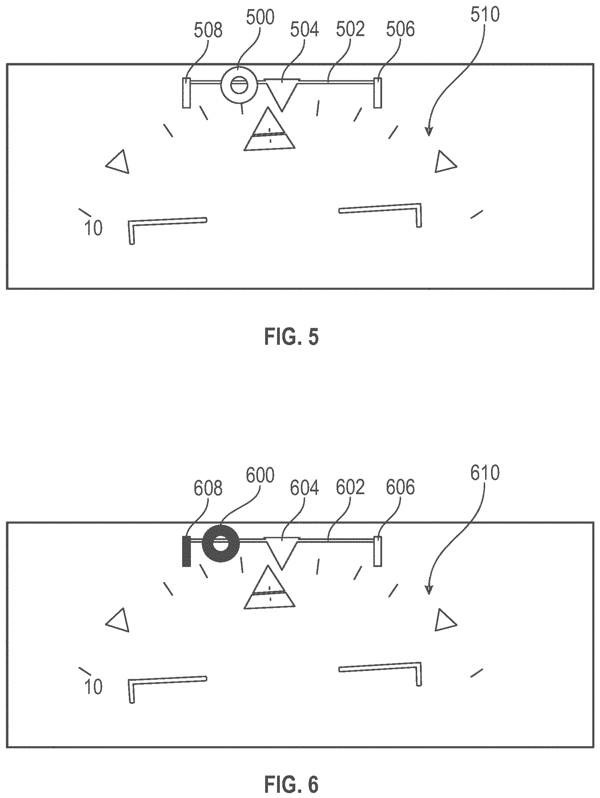

Referring to FIG. 5, an exemplary graphical representation of an aircraft roll rate 500 with respect to a roll rate scale 502 when the aircraft roll rate 500 is below a roll rate threshold in accordance with at least one embodiment is shown. When the aircraft roll rate 500 is below the roll rate threshold, the VTOL aircraft 200 is operating within the safety margins of the desirable roll rate range.

The roll rate scale 502 is a graphical representation of a desirable roll rate range. The roll rate scale 502 is graphically represented as a horizontal roll rate scale bar. The aircraft roll rate 500 is graphically depicted as a donut shaped symbol that overlays the roll rate scale 502 at the value of the aircraft roll rate. Since the aircraft roll rate 500 is below the roll rate threshold, the aircraft roll rate 500 is graphically depicted in an un-bolded format. The graphical representation of the roll rate scale 502 includes a roll rate marker 504 indicative of a zero-roll rate on the roll rate scale 502. The roll rate marker 504 is graphically represented as a triangle that overlays the roll rate scale 502.

The graphical representation of the roll rate scale 502 has a first end 506 and a second end 508. Each end 506, 508 of the roll rate scale 502 graphically represents a maximum desirable roll rate of desirable roll rate range. Since the aircraft roll rate 500 is below the roll rate threshold, both ends 506, 508 of the roll rate scale 502 are graphically depicted in an un-bolded format. The graphical representation of the aircraft roll rate 500 with respect to the roll rate scale 502 is collocated with a graphical representation of an aircraft roll angle in an aircraft roll angle indicator 510.

Referring to FIG. 6, an exemplary graphical representation of an aircraft roll rate 600 with respect to a roll rate scale 602 when the aircraft roll rate 600 is greater than a roll rate threshold in accordance with at least one embodiment is shown. When the aircraft roll rate 600 is above the roll rate threshold, the roll rate of the VTOL aircraft 200 is approaching a maximum desirable roll rate of the desirable roll rate range.

The roll rate scale 602 is a graphical representation of a desirable roll rate range. The roll rate scale 602 is graphically represented as a horizontal roll rate scale bar. The aircraft roll rate 600 is graphically depicted as a donut shaped symbol that overlays the roll rate scale 602 at the value of the aircraft roll rate. Since the aircraft roll rate 600 is above the roll rate threshold, the aircraft roll rate 600 is graphically depicted in a bolded format. The bolded graphical representation of the aircraft roll rate 600 alerts the pilot that the aircraft roll rate 600 is approaching a maximum desirable roll rate of the desirable roll rate range.

The graphical representation of the roll rate scale 602 includes a roll rate marker 604 indicative of a zero-roll rate on the roll rate scale 602. The roll rate marker 604 is graphically represented as a triangle that overlays the roll rate scale 602.

The graphical representation of the roll rate scale 602 has a first end 606 and a second end 608. Each end 606, 608 of the roll rate scale 602 graphically represents a maximum desirable roll rate of the desirable roll rate range. Since the aircraft roll rate 600 is above the roll rate threshold, the aircraft roll rate 600 is approaching a maximum desirable roll rate of the desirable roll rate range. The second end 608 of the roll rate scale 602 represents the maximum desirable roll rate of the desirable roll rate range that the aircraft roll rate 600 is approaching. The second end 608 or the roll rate scale is graphically depicted in a bolded format indicating that the aircraft roll rate 600 is approaching the maximum desirable roll rate represented by the second end 608 of the roll rate scale 602. The first end 606 of the roll rate scale 602 is graphically depicted in an un-bolded format. The bolded graphical representation of the second end 608 of the roll rate scale 602 alerts the pilot that the aircraft roll rate 600 is approaching the maximum desirable roll rate of the desirable roll rate range represented by the second end 608 of the roll rate scale 602.

The graphical representation of the aircraft roll rate 600 with respect to the roll rate scale 602 is collocated with a graphical representation of an aircraft roll angle in an aircraft roll angle indicator 610.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A system for displaying roll rate on a vertical take-off and landing, VTOL, aircraft display comprising:
at least one geospatial sensor (214) of a vertical take-off and landing, VTOL, aircraft (200);
a display device (14); and
a controller (204) communicatively coupled to the at least one geospatial sensor and the display device, the controller being configured to:
receive (302) aircraft roll data from the at least one geospatial sensor;
generate (310) a roll rate scale associated with a desirable roll rate range of the VTOL aircraft, wherein the desirable roll rate range of the VTOL aircraft corresponds to a roll rate range where the VTOL aircraft 200 will not experience aircraft roll angles that could potentially lead to flight safety issues;
determine (314) an aircraft roll rate of the VTOL aircraft based on the aircraft roll data; and
generate (318) the VTOL aircraft display comprising a graphical representation of the roll rate scale and the aircraft roll rate with respect to the roll rate scale for display on the display device.

2. The system of claim 1 wherein the controller is configured to:
determine (316) an aircraft roll angle of the VTOL aircraft based on the aircraft roll data received from the at least one geospatial sensor; and
generate (318) the VTOL aircraft display to include a graphical representation of the aircraft roll angle in an aircraft roll angle indicator for display on the display device.

3. The system of claim 1 further wherein the controller is configured to:
receive (304) at least one control input from the at least one geospatial sensor; and
generate (308) the desirable roll rate range based on the at least one control input.

4. The system of claim 3, wherein the at least one control input comprises at least one of airspeed data, groundspeed data, vertical speed data, vertical acceleration data, altitude data, pitch data, yaw data, heading data, atmospheric condition data, wind speed data, wind direction data, flight path data, radar altitude data, and geometric altitude data.

5. The system of claim 1, further comprising a flight control system, FCS, (210) of the VTOL aircraft and wherein the controller is configured to:
receive (306) an operational status of a component of the FCS; and
generate (308) the desirable roll rate range based on the operational status of the component of the FCS.

6. The system of claim 1, wherein the controller is configured to:
generate the graphical representation of the roll rate scale as a horizonal roll rate scale; and
overlay the graphical representation of the aircraft roll rate on the graphical representation of the horizontal roll rate scale.

7. The system of claim 1, wherein the controller is configured to:
generate the graphical representation of the roll rate scale as a horizonal roll rate scale bar; and
overlay the graphical representation of the aircraft roll rate as a donut shaped circle on the graphical representation of the horizontal roll rate scale bar.

8. The system of claim 1 wherein the controller is configured to generate the VTOL aircraft display to include numerical values associated with at least one of the desirable roll rate range and the aircraft roll rate.

9. The system of claim 1 wherein the controller is configured to:
determine whether the aircraft roll rate is greater than a roll rate threshold; and
generate the graphical representation of the aircraft roll rate in one of a first graphical format and a second graphical format based on the determination.

10. The system of claim 1, wherein the controller is configured to generate a roll rate threshold based on at least one of a control input received from the at least one geospatial sensor and an operational status of a component of an FCS of the VTOL aircraft.

11. The system of claim 1 wherein the controller is configured to:
determine whether the aircraft roll rate is greater than a roll rate threshold; and
generate at least one of a visual alert, a haptic alert, and an audio alert based on the determination.

12. The system of claim 1, wherein the VTOL aircraft is an electric VTOL, EVTOL, aircraft.

13. The system of claim 1, wherein the controller is configured to:
receive aircraft body rotation data from the at least one geospatial sensor; and
determine the aircraft roll rate of the VTOL aircraft based on the aircraft roll data and the aircraft body rotation data.

14. A method for displaying roll rate on a vertical take-off and landing, VTOL, aircraft display comprising:
receiving (302) aircraft roll data from at least one geospatial sensor of a VTOL aircraft;
generating (310) a roll rate scale associated with a desirable roll rate range of the VTOL aircraft, wherein the desirable roll rate range of the VTOL aircraft corresponds to a roll rate range where the VTOL aircraft will not experience aircraft roll angles that could potentially lead to flight safety issues;
determining (314) an aircraft roll rate of the VTOL aircraft based on the aircraft roll data; and
generating (318) the VTOL aircraft display comprising a graphical representation of the roll rate scale and the aircraft roll rate with respect to the roll rate scale for display on a display device.

15. The method of claim 14, further comprising:
determining (316) an aircraft roll angle of the VTOL aircraft based on the aircraft roll data received from the at least one geospatial sensor; and
generating (318) the VTOL aircraft display to include a graphical representation of the aircraft roll angle in an aircraft roll angle indicator for display on the display device.

## Patentansprüche

1. System zum Anzeigen einer Rollrate auf einer Vertikalstart und -lande, (VTOL), -Flugzeug-Anzeige, umfassend:
mindestens einen georäumlichen Sensor (214) eines Vertikalstart und -lande, (VTOL), - Flugzeugs (200);
eine Anzeigevorrichtung (14); und
eine Steuerung (204), die mit dem mindestens einen georäumlichen Sensor und der Anzeigevorrichtung kommunizierend gekoppelt ist, wobei die Steuerung dazu konfiguriert ist:
Flugzeugrolldaten von dem mindestens einen georäumlichen Sensor zu empfangen (302):
eine Rollratenskala zu erzeugen (310), die einem gewünschten Rollratenbereich des VTOL-Flugzeugs zugehörig ist, wobei der gewünschte Rollratenbereich des VTOL-Flugzeugs einem Rollratenbereich entspricht, in dem das VTOL-Flugzeug (200) keine Flugzeugrollwinkel erfährt, die potenziell zu Flugsicherheitsproblemen führen könnten;
eine Flugzeugrollrate des VTOL-Flugzeugs auf Basis der Flugzeugrolldaten zu bestimmen (314); und
die VTOL-Flugzeug-Anzeige, die eine graphische Darstellung der Rollratenskala und der Flugzeugrollrate in Bezug auf die Rollratenskala umfasst, zur Anzeige auf der Anzeigevorrichtung zu erzeugen (318).

2. System nach Anspruch 1, wobei die Steuerung dazu konfiguriert ist:
einen Flugzeugrollwinkel des VTOL-Flugzeugs auf Basis der von dem mindestens einen georäumlichen Sensor empfangenen Flugzeugrolldaten zu bestimmen (316); und
die VTOL-Flugzeug-Anzeige zur Anzeige auf der Anzeigevorrichtung so zu erzeugen (318), dass sie eine graphische Darstellung des Flugzeugrollwinkels in einem Flugzeugrollwinkelindikator beinhaltet.

3. System nach Anspruch 1, wobei die Steuerung ferner dazu konfiguriert ist:
mindestens eine Steuereingabe von dem mindestens einen georäumlichen Sensor zu empfangen (304); und
den gewünschten Rollratenbereich auf Basis der mindestens einen Steuereingabe zu erzeugen (308).

4. System nach Anspruch 3, wobei die mindestens eine Steuereingabe mindestens eines von Luftgeschwindigkeitsdaten, Bodengeschwindigkeitsdaten, Vertikalgeschwindigkeitsdaten, Vertikalbeschleunigungsdaten, Höhendaten, Neigungsdaten, Gierdaten, Ausrichtungsdaten, Atmosphärebedingungsdaten, Windgeschwindigkeitsdaten, Windrichtungsdaten, Flugpfaddaten, Radarhöhendaten und geometrischen Höhendaten umfasst.

5. System nach Anspruch 1, ferner umfassend ein Flugsteuersystem, FCS, (210) des VTOL-Flugzeugs und wobei die Steuerung dazu konfiguriert ist:
einen Betriebsstatus einer Komponente des FCS zu empfangen (306); und
den gewünschten Rollratenbereich auf Basis des Betriebsstatus der Komponente des FCS zu erzeugen (308).

6. System nach Anspruch 1, wobei die Steuerung dazu konfiguriert ist:
die graphische Darstellung der Rollratenskala als eine horizontale Rollratenskala zu erzeugen; und
die graphische Darstellung der Flugzeugrollrate auf der graphischen Darstellung der horizontalen Rollratenskala zu überlagern.

7. System nach Anspruch 1, wobei die Steuerung dazu konfiguriert ist:
die graphische Darstellung der Rollratenskala als einen horizontalen Rollratenskalabalken zu erzeugen; und
die graphische Darstellung der Flugzeugrollrate auf als einen donutförmigen Kreis auf der graphischen Darstellung des horizontalen Rollratenskalabalkens zu überlagern.

8. System nach Anspruch 1, wobei die Steuerung dazu konfiguriert ist, die VTOL-Flugzeug-Anzeige so zu erzeugen, dass sie numerische Werte beinhaltet, die mindestens einem von dem gewünschten Rollratenbereich und der Flugzeugrollrate zugehörig sind.

9. System nach Anspruch 1, wobei die Steuerung dazu konfiguriert ist:
zu bestimmen, ob die Flugzeugrollrate größer als ein Rollratenschwellenwert ist; und
die graphische Darstellung der Flugzeugrollrate in einem von einem ersten graphischen Format und einem zweiten graphischen Format auf Basis der Bestimmung zu erzeugen.

10. System nach Anspruch 1, wobei die Steuerung dazu konfiguriert ist, einen Rollratenschwellenwert auf Basis mindestens eines von einer von dem mindestens einen georäumlichen Sensor empfangenen Steuereingabe und einem Betriebsstatus einer Komponente eines FCS des VTOL-Flugzeugs zu erzeugen.

11. System nach Anspruch 1, wobei die Steuerung dazu konfiguriert ist:
zu bestimmen, ob die Flugzeugrollrate größer als ein Rollratenschwellenwert ist; und
auf Basis der Bestimmung mindestens eines von einem optischen Alarm, einem haptischen Alarm und einem Audioalarm zu erzeugen.

12. System nach Anspruch 1, wobei das VTOL-Flugzeug ein elektrisches VTOL, EVTOL,-Flugzeug ist.

13. System nach Anspruch 1, wobei die Steuerung dazu konfiguriert ist:
Flugzeugkörperdrehungsdaten von dem mindestens einen georäumlichen Sensor zu empfangen; und
die Flugzeugrollrate des VTOL-Flugzeugs auf Basis der Flugzeugrolldaten und der Flugzeugkörperdrehungsdaten zu bestimmen.

14. Verfahren zum Anzeigen einer Rollrate auf einer Vertikalstart und -lande, (VTOL), -Flugzeug-Anzeige, umfassend:
Empfangen (302) von Flugzeugrolldaten von dem mindestens einen georäumlichen Sensor;
Erzeugen (310) einer Rollratenskala, die einem gewünschten Rollratenbereich des VTOL-Flugzeugs zugehörig ist, wobei der gewünschte Rollratenbereich des VTOL-Flugzeugs einem Rollratenbereich entspricht, in dem das VTOL-Flugzeug keine Flugzeugrollwinkel erfährt, die potenziell zu Flugsicherheitsproblemen führen könnten;
Bestimmen (314) einer Flugzeugrollrate des VTOL-Flugzeugs auf Basis der Flugzeugrolldaten; und
Erzeugen (318) der VTOL-Flugzeug-Anzeige, die eine graphische Darstellung der Rollratenskala und der Flugzeugrollrate in Bezug auf die Rollratenskala umfasst, zur Anzeige auf der Anzeigevorrichtung.

15. Verfahren nach Anspruch 14, ferner umfassend:
Bestimmen (316) eines Flugzeugrollwinkels des VTOL-Flugzeugs auf Basis der von dem mindestens einen georäumlichen Sensor empfangenen Flugzeugrolldaten; und
Erzeugen (318) der VTOL-Flugzeug-Anzeige, sodass sie eine graphische Darstellung des Flugzeugrollwinkels in einem Flugzeugrollwinkelindikator beinhaltet, zur Anzeige auf der Anzeigevorrichtung.

## Revendications

1. Système d'affichage de taux de roulis sur un affichage d'aéronef à décollage et atterrissage verticaux, VTOL, comprenant :
au moins un capteur géospatial (214) d'un aéronef à décollage et atterrissage verticaux, VTOL, (200) ;
un dispositif d'affichage (14) ; et
un contrôleur (204) couplé de manière communicative à l'au moins un capteur géospatial et au dispositif d'affichage, le contrôleur étant configuré pour :
recevoir (302) des données de roulis d'aéronef à partir de l'au moins un capteur géospatial ;
générer (310) une échelle de taux de roulis associée à une plage de taux de roulis souhaitable de l'aéronef VTOL, dans lequel la plage de taux de roulis souhaitable de l'aéronef VTOL correspond à une plage de taux de roulis où l'aéronef VTOL (200) ne connaîtra pas d'angles de roulis d'aéronef pouvant potentiellement conduire à des problèmes de sécurité de vol ;
déterminer (314) un taux de roulis d'aéronef de l'aéronef VTOL sur la base des données de roulis d'aéronef ; et
générer (318) l'affichage d'aéronef VTOL comprenant une représentation graphique de l'échelle de taux de roulis et du taux de roulis d'aéronef par rapport à l'échelle de taux de roulis pour affichage sur le dispositif d'affichage.

2. Système selon la revendication 1, dans lequel le contrôleur est configuré pour :
déterminer (316) un angle de roulis d'aéronef de l'aéronef VTOL sur la base des données de roulis d'aéronef reçues à partir de l'au moins un capteur géospatial ; et
générer (318) l'affichage d'aéronef VTOL de manière à inclure une représentation graphique de l'angle de roulis d'aéronef dans un indicateur d'angle de roulis d'aéronef pour affichage sur le dispositif d'affichage.

3. Système selon la revendication 1, dans lequel le contrôleur est en outre configuré pour :
recevoir (304) au moins une entrée de commande à partir de l'au moins un capteur géospatial ; et
générer (308) la plage de taux de roulis souhaitable sur la base de l'au moins une entrée de commande.

4. Système selon la revendication 3, dans lequel l'au moins une entrée de commande comprend au moins l'une parmi des données anémométriques, des données de vitesse au sol, des données de vitesse verticale, des données d'accélération verticale, des données d'altitude, des données de tangage, des données de lacet, des données de cap, des données de conditions atmosphériques, des données de vitesse du vent, des données de direction du vent, des données de trajectoire de vol, des données d'altitude radar et des données d'altitude géométrique.

5. Système selon la revendication 1, comprenant en outre un système de commandes de vol, FCS, (210) de l'aéronef VTOL et dans lequel le contrôleur est configuré pour :
recevoir (306) un état opérationnel d'un composant du FCS ; et
générer (308) la plage de taux de roulis souhaitable sur la base de l'état opérationnel du composant du FCS.

6. Système selon la revendication 1, dans lequel le contrôleur est configuré pour :
générer la représentation graphique de l'échelle de taux de roulis sous forme d'une échelle de taux de roulis horizontale ; et
superposer la représentation graphique du taux de roulis d'aéronef sur la représentation graphique de l'échelle de taux de roulis horizontale.

7. Système selon la revendication 1, dans lequel le contrôleur est configuré pour :
générer la représentation graphique de l'échelle de taux de roulis sous forme d'une barre d'échelle de taux de roulis horizontale ; et
superposer la représentation graphique du taux de roulis d'aéronef sous forme d'un cercle en forme d'anneau sur la représentation graphique de la barre d'échelle de taux de roulis horizontale.

8. Système selon la revendication 1, dans lequel le contrôleur est configuré pour générer l'affichage d'aéronef VTOL de manière à inclure des valeurs numériques associées à au moins l'un parmi la plage de taux de roulis souhaitable et le taux de roulis d'aéronef.

9. Système selon la revendication 1, dans lequel le contrôleur est configuré pour :
déterminer si le taux de roulis d'aéronef est supérieur à un seuil de taux de roulis ; et
générer la représentation graphique du taux de roulis d'aéronef selon l'un parmi un premier format graphique et un deuxième format graphique sur la base de la détermination.

10. Système selon la revendication 1, dans lequel le contrôleur est configuré pour générer un seuil de taux de roulis sur la base d'au moins l'un parmi une entrée de commande reçue à partir de l'au moins un capteur géospatial et un état opérationnel d'un composant d'un FCS de l'aéronef VTOL.

11. Système selon la revendication 1, dans lequel le contrôleur est configuré pour :
déterminer si le taux de roulis d'aéronef est supérieur à un seuil de taux de roulis ; et
générer au moins l'une parmi une alerte visuelle, une alerte haptique et une alerte audio sur la base de la détermination.

12. Système selon la revendication 1, dans lequel l'aéronef VTOL est un aéronef VTOL électrique, EVTOL.

13. Système selon la revendication 1, dans lequel le contrôleur est configuré pour :
recevoir des données de rotation de corps d'aéronef à partir de l'au moins un capteur géospatial ; et
déterminer le taux de roulis d'aéronef de l'aéronef VTOL sur la base des données de roulis d'aéronef et des données de rotation de corps d'aéronef.

14. Procédé d'affichage de taux de roulis sur un affichage d'aéronef à décollage et atterrissage verticaux, VTOL, comprenant :
la réception (302) de données de roulis d'aéronef à partir d'au moins un capteur géospatial d'un aéronef VTOL ;
la génération (310) d'une échelle de taux de roulis associée à une plage de taux de roulis souhaitable de l'aéronef VTOL, dans lequel la plage de taux de roulis souhaitable de l'aéronef VTOL correspond à une plage de taux de roulis où l'aéronef VTOL ne connaîtra pas d'angles de roulis d'aéronef pouvant potentiellement conduire à des problèmes de sécurité de vol ;
la détermination (314) d'un taux de roulis d'aéronef de l'aéronef VTOL sur la base des données de roulis d'aéronef ; et
la génération (318) de l'affichage d'aéronef VTOL comprenant une représentation graphique de l'échelle de taux de roulis et du taux de roulis d'aéronef par rapport à l'échelle de taux de roulis pour affichage sur un dispositif d'affichage.

15. Procédé selon la revendication 14, comprenant en outre :
la détermination (316) d'un angle de roulis d'aéronef de l'aéronef VTOL sur la base des données de roulis d'aéronef reçues à partir de l'au moins un capteur géospatial ; et
la génération (318) de l'affichage d'aéronef VTOL de manière à inclure une représentation graphique de l'angle de roulis d'aéronef dans un indicateur d'angle de roulis d'aéronef pour affichage sur le dispositif d'affichage.
